# EUROPÄISCHE PATENTANMELDUNG

(11) **EP 0 999 351 A1**
(43) Veröffentlichungstag der Anmeldung: **10.05.2000**
(21) Anmeldenummer: 98121037.0
(22) Anmeldetag: 05.11.1998
(51) Int. Cl.: F01N 7/10, F02B 37/02

(54) **Doppelwandiger Abgaskrümmer eines Mehrzylinder-Dieselmotors**

(71) Anmelder: ZEUNA-STÄRKER GMBH & CO KG, D-86154 Augsburg (DE)
(72) Erfinder: Klaus, Benedikt, Dr., 86356 Neusäss (DE)
(74) Vertreter: Grättinger & Partner (GbR)

(57) **Zusammenfassung**

Bei einem Mehrzylinder-Dieselmotor umfaßt die Abgasanlage einen Abgaskrümmer, einen Abgasturbolader und eine katalytische Abgasreinigungsvorrichtung. Dabei ist der Abgaskrümmer doppelwandig aufgebaut, indem er eine metallische Außenschale und eine metallische Innenschale, welche außerhalb der Verbindungsbereiche mit Abstand zur Außenschale innerhalb dieser angeordnet ist, umfaßt. Sowohl die Außenschale wie auch die Innenschale sind in Dünnwandtechnik mit einer Wandstärke von maximal 1,3 mm ausgeführt.

## Beschreibung

Die vorliegende Erfindung betrifft einen Mehrzylinder-Dieselmotor mit einer Abgasanlage, die einen Abgaskrümmer, einen Abgasturbolader und eine katalytische Abgasreinigungsvorrichtung umfaßt.

Mehrzylinder-Dieselmotoren der vorstehend genannten Art zählen durch Benutzung in Kraftfahrzeugen zum Stand der Technik. Bei bekannten derartigen Motoren sind die Abgaskrümmer als Gußteile ausgeführt. Die Integration einer Schadstoffe vermindernden katalytischen Abgasreinigungsvorrichtung in die Abgasanlage folgt dabei aus den steigenden Anforderungen an die Abgasqualität. Wie bereits bei Dieselmotoren ohne eine solche katalytische Abgasreinigungsvorrichturig bewirkt auch bei gattungsgemäßen Dieselmotoren der Abgasturbolader eine Steigerung des Drehmoments insbesondere im mittleren Drehzahlbereich.

Ein Problem bei aufgeladenen Dieselmotoren ist das sog. "Turboloch". Mit diesem Begriff wird die durch gas- und thermodynamische Effekte bedingte zeitliche Verzögerung umschrieben, mit welcher als Reaktion auf eine gesteigerte Kraftstoffeinspritzung das von dem Motor abgegebene Drehmoment zunimmt. Dieses Phänomen ist zwar bei modernen Turbo-Dieselmotoren nicht mehr so ausgeprägt wie bei aufgeladenen Dieselmotoren früherer Bauart; nach wie vor ist jedoch auch bei modernen gattungsgemäßen Dieselmotoren eine unerwünschte zeitliche Verzögerung zwischen dem Treten des Gaspedale und dem Beschleunigen des Fahrzeugs zu verzeichnen. Zudem stoßen gerade moderne, besonders wirtschaftliche Turbo-Dieselmotoren auch bei Betriebstemperatur im vorübergehenden Leerlaufbetrieb (z.B. bei Ampelstops) unerwünscht hohe Schadstoffmengen aus.

Hieraus leitet sich die der vorliegenden Erfindung zugrundeliegende Aufgabenstellung ab, die darin besteht, Mehrzylinder-Dieselmotoren der gattungsgemäßen Art hinsichtlich ihres Dynamikverhaltens zu verbessern, indem die Ausprägung des sog. Turbolochs bzw. dessen Auswirkungen reduziert werden, wobei zugleich die Abgasqualität in vorübergehenden Leerlaufphasen verbessert werden soll.

Gemäß der vorliegenden Erfindung wird diese Aufgabe dadurch gelöst, daß der Abgaskrümmer doppelwandig aufgebaut ist, indem er eine metallische Außenschale und eine metallische Innenschale, welche außerhalb der Verbindungsbereiche mit Abstand zur Außenschale innerhalb dieser angeordnet ist, umfaßt, wobei sowohl die Außenschale wie auch die Innenschale in Dünnwandtechnik mit einer Wandstärke von maximal 1,3 mm ausgeführt sind. Diese spezifische Gestaltung des Abgaskrümmers wirkt sich in durchaus überraschender Weise sowohl in einer Verbesserung des Dynamikverhaltens des betreffenden Motors gegenüber einem baugleichen Motor mit Gußkrümmer wie auch dahingehend aus, daß die Abgasqualität während vorübergehender Leerlaufphasen bei betriebswarmem Motor, verglichen mit konventionellen gattungsgemäßen Dieselmotoren mit Gußkrümmer, verbessert wird. Was die Verbesserung des Dynamikverhaltens angeht, so läßt sich eine Erklärung hierfür darin finden, daß beim erfindungsgemäßen Motor die beim Gasgeben bereitgestellte höhere Abgasenthalpie infolge reduzierter Wandwärmeverluste unmittelbar, uneingeschränkt und unverzüglich der Turbine des Abgasturboladers zur Verfügung gestellt wird, so daß die Verdichtung der Ladeluft entsprechend rascher einsetzt. Für die sich parallel einstellende Verbesserung des Leerlaufabgases bei betriebswarmem Motor kann eine Erklärung nur darin gesehen werden, daß die spezifische Krümmergestaltung der bei modernen aufgeladenen Dieselmotoren bestehenden Tendenz, daß die nachgeschaltete katalytische Abgasreinigungsvorrichtung im Leerlauf des Motors infolge der dann herrschenden äußerst geringen Abgastemperaturen auskühlt, entgegenwirkt. Hier bewirkt die sehr hohe Temperatur der Innenschale eine Wiedererwärmung des relativ kalten Abgases, so daß bei dem erfindungsgemäßen Dieselmotor die katalytische Abgasreinigungsvorrichtung ihre Betriebstemperatur bei vorübergehendem Motorenleerlauf über einen längeren Zeitraum behält als bei bekannten gattungsgemäßen Dieselmotoren mit Gußkrümmer. Der hierdurch ermöglichte Erhalt der Betriebstemperatur der katalytischen Abgasreinigungsvorrichtung auch im vorübergehenden Leerlauf resultiert infolge der nicht unterbrochenen Funktion der katalytischen Abgasreinigungseinrichtung in der angestrebten Verbesserung der Abgasqualität. Im Ergebnis zeichnet sich der erfindungsgemäße Mehrzylinder-Dieselmotor durch eine besonders vorteilhafte Kombination einer verbesserten Fahrzeugdynamik bei gleichzeitig verbessertem Abgasverhalten aus.

Soweit doppelwandig aufgebaute Abgaskrümmer als solche zum Stand der Technik zählen (insbesondere EP-A-0582985), vermögen sie den erfindungsgemäßen aufgeladenen und mit einer katalytischen Abgasreinigungsvorrichtung ausgestatteten Mehrzylinder-Dieselmotor nicht nahezulegen. Hier ist zu beachten, daß bei dem bekannten doppelwandigen Abgaskrümmer gemäß der EP-A-0582985 bei der Außenschale eine Wandstärke von mindestens 1,5 mm vorgesehen ist, was im Bereich der Abgastechnik nicht als "Dünnwandtechnik" bezeichnet werden kann. Insbesondere jedoch fehlt dem Stand der Technik jeglicher Hinweis darauf, daß sich bei einem aufgeladenen, mit einer katalytischen Abgasreinigungsvorrichtung ausgestatteten Mehrzylinder-Dieselmotor durch die beanspruchte Gestaltung des Abgaskrümmers sowohl das Dynamikverhalten wie auch das Abgasverhalten in vorübergehenden Leerlaufphasen verbessern läßt.

Eine erste bevorzugte Weiterbildung der Erfindung zeichnet sich dadurch aus, daß die Wandstärke der Außenschale zwischen 0,8 und 1,3 mm beträgt. Bei einer derartigen Bemessung der Wandstärke der Außenschale werden die durch die vorliegende Erfindung anzustrebenden Auswirkungen auf das Dynamikverhalten und die Abgasqualität in einem besonders ausgeprägten Maße erreicht. Dies gilt auch für die weitere bevorzugte Weiterbildungen der Erfindung kennzeichnenden Merkmale, wonach der Abstand der Innenschale zur Außenschale bevorzugt zwischen 4 und 6 mm beträgt, wobei der Zwischenraum zwischen Außenschale und Innenschale bevorzugt mit Luft gefüllt ist, und wonach ferner die Innenschale eine Wandstärke zwischen 0,6 und 0,9 mm aufweist.

Des weiteren sind die Vorteile der vorliegenden Erfindung besonders ausgeprägt bei solchen Mehrzylinder-Dieselmotoren, deren Abgasturbolader über einen verstellbaren Leitapparat verfügen. Bei diesen sog. VTG-Turboladern läßt sich infolge der Verstellbarkeit des Leitapparats die durch die vorliegenden Erfindung bewirkte schlagartige Steigerung der an der Turbine des Abgasturboladers bereitgestellten Abgasenthalpie besonders günstig umsetzen.

Der Umstand, daß bei dem erfindungsgemäßen Motor sowohl die Innenschale wie auch die Außenschale des doppelwandig aufgebauten Abgaskrümmers in Dünnwandtechnik ausgeführt sind, macht insbesondere vor dem Hintergrund, daß die Abgasanlage sowohl einen (relativ schweren) Abgasturbolader als auch eine (ebenfalls relativ schwere) katalytische Abgasreinigungsvorrichtung umfaßt, aus Gründen der Festigkeit eine Abstützung des Abgasturboladers mittels einer Stützstrebe am Motor zweckmäßig.

Vor dem Hintergrund, daß unterschiedliche Werkstoffe sich auch hinsichtlich solcher Eigenschaften unterscheiden, die Auswirkungen haben auf diejenigen Effekte, welche sich die vorliegende Erfindung zunutze macht, ist das Ausmaß, in welchem bei einem erfindungsgemäßen Mehrzylinder-Dieselmotor die angestrebten, oben angegebenen Ziele erreicht werden, in gewissem Umfang von der Materialwahl abhängig. Für die Herstellung der Außenschale hat sich insbesondere Werkstoff 1.4309 bewährt, während die Innenschale besonders bevorzugt aus Werkstoff 1.4828 hergestellt wird.

Die vorliegende Erfindung läßt sich in Anwendung verschiedener Verfahren zur Herstellung des betreffenden Abgaskrümmers realisieren. Geeignet sind insbesondere die Herstellung der Innenschale und der Außenschale jeweils in Halbschalenbauweise. Keinesfalls ist jedoch aus den Begriffen "Innenschale" und "Außenschale" abzuleiten, daß diese Bauteile zwingend aus Halbschalen oder sonstigen Teilschalen zusammengefügt sind. Vielmehr können die Innenschale und/oder die Außenschale auch aus Rohr hergestellt, insbesondere einstückig gefertigt, bzw. aus Rohrabschnitten zusammengefügt sein. So kommt insbesondere in Betracht eine Herstellung von Innenschale und Außenschale mittels Innenhochdruckumformung. Andere bekannte Herstellungsverfahren sowie Mischverfahren kommen ebenfalls in Betracht.

## Patentansprüche

1. Mehrzylinder-Dieselmotor mit einer Abgasanlage, die einen Abgaskrümmer, einen Abgasturbolader und eine katalytische Abgasreinigungsvorrichtung umfaßt,
dadurch gekennzeichnet,
daß der Abgaskrümmer doppelwandig aufgebaut ist, indem er eine metallische Außenschale und eine metallische Innenschale, welche außerhalb der verbindungsbereiche mit Abstand zur Außenschale innerhalb dieser angeordnet ist, umfaßt, wobei sowohl die Außenschale wie auch die Innenschale in Dünnwandtechnik mit einer Wandstärke von maximal 1,3 mm ausgeführt sind.

2. Mehrzylinder-Dieselmotor nach Anspruch 1,
dadurch gekennzeichnet,
daß die Wandstärke der Außenschale zwischen 0,8 und 1,3 mm beträgt.

3. Mehrzylinder-Dieselmotor nach einem der Ansprüche 1 oder 2,
dadurch gekennzeichnet,
daß der Abstand der Innenschale zur Außenschale zwischen 4,0 und 6,0 mm beträgt.

4. Mehrzylinder-Dieselmotor nach einem der Ansprüche 1 bis 3,
dadurch gekennzeichnet,
daß der Zwischenraum zwischen der Außenschale und der Innenschale mit Luft gefüllt ist.

5. Mehrzylinder-Dieselmotor nach einem der Ansprüche 1 bis 4,
dadurch gekennzeichnet,
daß die Innenschale eine Wandstärke zwischen 0,6 und 0,9 mm aufweist.

6. Mehrzylinder-Dieselmotor nach einem der Ansprüche 1 bis 5,
dadurch gekennzeichnet,
daß der Abgasturbolader mittels einer Stützstrebe am Motor abgestützt ist.

7. Mehrzylinder-Dieselmotor nach einem der Ansprüche 1 bis 6,
dadurch gekennzeichnet,
daß der Abgasturbolader über einen verstellbaren Leitapparat verfügt.
